Europäisches Patentamt

European Patent Office

Office européen des brevets

(19)

(11) Numéro de publication : **0 475 847 B1**

(12) # FASCICULE DE BREVET EUROPEEN

(45) Date de publication du fascicule du brevet :
**16.08.95 Bulletin 95/33**

(51) Int. Cl.⁶ : **G02F 1/163**

(21) Numéro de dépôt : **91402431.0**

(22) Date de dépôt : **13.09.91**

(54) **Vitrage électrochrome.**

(30) Priorité : **14.09.90 FR 9011418**

(43) Date de publication de la demande :
**18.03.92 Bulletin 92/12**

(45) Mention de la délivrance du brevet :
**16.08.95 Bulletin 95/33**

(84) Etats contractants désignés :
**AT BE CH DE DK ES FR GB IT LI LU NL SE**

(56) Documents cités :
**EP-A- 0 253 713
DE-A- 2 737 031
JP-A- 2 216 131
PATENT ABSTRACTS OF JAPAN, vol. 13, no.
436 (P-938)(3784) 29 September 1989 ; &
JP-A-1 164 928
PATENT ABSTRACTS OF JAPAN, vol. 12, no.
456 (P-793)(3303) 30 Novembre 1988 ; &
JP-A-63 179 335**

(73) Titulaire : **SAINT-GOBAIN VITRAGE
"Les Miroirs",
18 Avenue d'Alsace
F-92400 Courbevoie (FR)**

(72) Inventeur : **Defendini, Francis
16, rue Gustave Flaubert
F-92500 Rueil Malmaison (FR)**
Inventeur : **Lerbet, François
6, avenue Claude Vellefaux
F-75010 Paris (FR)**

(74) Mandataire : **Menes, Catherine et al
SAINT-GOBAIN RECHERCHE 39, Quai Lucien
Lefranc
F-93300 Aubervilliers (FR)**

EP 0 475 847 B1

## Description

La présente invention concerne les vitrages à transmission électrocommandée ou autrement dit les vitrages dits électrochromes dont l'état de coloration peut être modifié sous l'effet d'un champ électrique. L'invention s'applique plus particulièrement au contrôle de l'apport solaire dans les bâtiments ou les habitacles des véhicules automobiles.

Les vitrages électrochromes sont des vitrages comportant une couche d'un matériau susceptible d'insérer de façon réversible des cations, en général des protons ou des ions lithium, et dont les états d'oxydation correspondant aux deux états inséré ou désinséré présentent des états de coloration différents. Dans le cas du trioxyde de tungstène, on passe ainsi d'un état oxydé incolore à un état réduit de coloration bleu-nuit, selon la réaction chimique $WO_3 + x M^+ + xe^- < - - - -> M_xWO_3$.

Pour que cette réaction se produise, il est donc nécessaire de disposer à côté de la couche de matériau électrochrome d'une source de cations et d'une source d'électrons, respectivement constituées par une couche d'un électrolyte à conductivité ionique et par une couche électroconductrice. De plus, le système comprend une contre-électrode capable elle-aussi d'insérer et désinsérer des cations de façon réversible, et symétriquement par rapport à la couche de matériau électrochrome. Avec un matériau électrochrome cathodique comme l'oxyde de tungstène, on utilise de préférence une contre-électrode faite d'un matériau électrochrome anodique tel que l'oxyde d'iridium qui est incolore à l'état réduit et gris-jaune à l'état coloré, l'insertion se faisant suivant l'équilibre $Mx - IrOy < - - - -> IrOy + xM^+ + xe^-$. Pour ce second équilibre, la source cationique est la couche électrolytique du système, la source d'électrons est constituée par la seconde couche électroconductrice, les deux couches électroconductrices formant les deux électrodes entre lesquelles est appliquée la différence de potentiel électrique.

La couche d'électrolyte, élément fondamental de ce système, doit être bien évidemment un bon conducteur ionique (pour des temps de commutation brefs) et posséder la conductivité électronique la plus faible possible (conductivité ionique sur conductivité électronique supérieure à $10^8$). De plus elle doit être chimiquement inerte à l'égard des autres couches du système - d'où une limitation à l'emploi des électrolytes liquides acides ou basiques qui de plus posent des problèmes de mise en oeuvre avec des surfaces aussi grandes que celles des fenêtres. Par ailleurs elle doit être transparente de manière à autoriser une transmission élevée du vitrage à l'état décoloré. Enfin, elle doit être préparée avec une bonne régularité d'épaisseur, l'électrolyte ne devant notamment pas générer de courts-circuits.

Les matériaux macromoléculaires à conductivité ionique, notamment protonique, sont tout particulièrement adaptés à la réalisation de couches électrolytiques pour des systèmes électrochromes de grande taille, ceci étant plus particulièrement vrai pour les électrolytes protoniques solides ne comportant pas de protons hydratés qui réduisent le domaine de stabilité rédox de ces matériaux. Dans la demande de brevet européen EP-A1-253 713 il a ainsi été proposé d'utiliser comme électrolyte une solution solide d'acide phosphorique anhydre dans du poly(oxyde) d'éthylène, avec un rapport O/H du nombre d'atomes d'oxygène du polymère sur le nombre d'atomes de l'acide égal à 0,66.

Ce type d'électrolyte est avantageusement bon conducteur protonique à température ambiante, une conductivité protonique de l'ordre de $9 \ 10^{-5} \ \Omega^{-1} \ cm^{-1}$ pouvant par exemple être obtenue à 20°C. Mais cette conductivité protonique est multipliée par cinquante si la température s'élève par exemple à 80°C. Or si dans les applications affichage des systèmes électrochromes, on a des fonctionnements pratiquement isothermes, tel n'est absolument pas le cas dans les applications vitrages pour le bâtiment ou l'automobile car ces vitrages sont exposés au rayonnement solaire et absorbent une quantité d'énergie d'autant plus importante qu'ils sont dans un état coloré ; en pratique des températures de 100°C ou plus sont parfois mesurées.

Dans l'absolu, une conductivité ionique élevée est plutôt favorable au bon fonctionnement du système, une mobilité des ions plus grande devant a priori permettre des temps de commutation plus courts comme il a été souligné plus haut, encore que ce point n'est pas toujours vérifié expérimentalement car d'autres facteurs limitatifs tels que la vitesse de diffusion des ions et des électrons dans les couches de matériaux électrochromes entrent également en ligne de compte.

Par contre cette augmentation de la conductivité ionique pose un problème dans la mesure où de cette dernière dépend la relation entre la différence de potentiel aux bornes du système et l'intensité du courant au même instant, cette relation n'étant toutefois pas linéaire. On sait en effet que du point de vue électrochimique, la différence de potentiel $V_A-V_B$ appliquée à un instant donné entre deux points A et B appartenant chacun à une des couches électroconductrices peut s'écrire $V_A-V_B = E_A-E_B + \Sigma\mu + \Sigma RI$ où $\Sigma\mu$ représente la somme des surtensions électrochimiques et est essentiellement fonction des interfaces, $\Sigma RI$ la somme des pertes de potentiel par chute ohmique qui conformément à la loi d'Ohm sont fonction de la résistance des différentes couches du système, incluant la résistance des couches électroconductrices et de l'électrolyte, et de l'intensité de courant I à ce même instant, et $E_A-E_B$ la différence de potentiel électrochimique entre les deux points A et B, ou autrement dit le potentiel effectivement disponible pour les réactions chimiques s'opérant dans le système.

Cette différence de potentiel électrochimique $E_A$-$E_B$ doit être suffisamment élevée, en valeurs absolues, pour que les réactions d'insertion et de désinsertion des cations dans les couches de matériaux électrochromes puissent se produire. La coloration du système précédemment décrit à base d'oxydes de tungstène et d'iridium n'est ainsi thermodynamiquement possible que pour une différence de potentiel supérieure à 0,6 volt. Inversement, partant de l'état coloré, la décoloration ne nécessite pas l'application d'une différence de potentiel puisque le système est assimilable dans cette configuration à un accumulateur en position de décharge mais cette décoloration peut être accélérée si une différence de potentiel non nulle (en valeur absolue) est néanmoins appliquée. Au-dessus de ces valeurs, les cinétiques des réactions sont plus rapides, il est donc plus particulièrement avantageux de travailler avec des différences de potentiel grandes (du moins en valeur absolue).

Toutefois aussi grande soit telle, cette différence de potentiel doit être inférieure aux potentiels thermodynamiques d'autres réactions parasitaires telles que notamment la réduction du proton en hydrogène moléculaire ou l'oxydation en oxygène des traces d'eau. Compte tenu des surtensions aux interfaces, cette limite supérieure peut être fixée à 1,5 volt pour la réaction d'insertion des protons dans le trioxyde de tungstène et à -0,6 volt pour la désinsertion (et donc insertion dans l'oxyde d'iridium).

Ces limites données, le problème de l'alimentation d'un système électrochrome est que l'on maîtrise facilement la tension $V_A$-$V_B$ et non la valeur de la différence de potentiel électrochimique $E_A$-$E_B$ d'autant que cette dernière est elle-même fonction de l'intensité du courant initial selon une fonction exponentielle. Sans entrer plus loin dans les considérations mathématiques relatives à ces équations électrochimiques, si la tension $V_A$-$V_B$ reste inchangée, une augmentation de la température du système s'accompagne par suite d'une diminution de la résistivité de l'électrolyte, d'une augmentation de l'intensité instantanée du courant et d'un risque de dégradation du système alors placé hors de son domaine de stabilité rédox.

Il est par ailleurs connu de la demande de brevet japonais JP-A-1 164 928. un vitrage électrochrome dont le mode de fonctionnement prend en compte la température, avec en particulier une alimentation électrique du vitrage conçue de façon à ce que la tension appliquée audit vitrage augmente quand la température diminue.

Un premier objet de l'invention est la fourniture d'un vitrage électrochrome dont la commande de l'alimentation électrique déterminant la tension $V_A$-$V_B$ prenne en compte ce facteur température.

Ce but est atteint au moyen d'un vitrage électrochrome tel que défini dans la revendication 1.

Cette température peut être mesurée directement par exemple par un thermomètre pouvant être placé au contact d'une des feuilles de verre. Dans la mesure où les systèmes électrochromes sont réalisés de préférence avec des feuilles de verre minces, de préférence de moins de deux millimètres d'épaisseur chacune afin de pouvoir les substituer à la feuille de verre en place dans la fenêtre par exemple, on peut les considérer comme relativement isothermes, la température mesurée à la surface des feuilles de verre peut donc être considérée avec une bonne approximation comme celle de l'électrolyte. Ceci est d'autant plus vrai que la thermosensibilité du système ne se manifeste que pour des écarts de température d'au moins une dizaine de degrés et qu'il importe donc peu de connaître au degré près la température de l'électrolyte.

Avec des systèmes plus épais, notamment dans le cas de vitrages feuilletés ou de vitrages multiples, qui sont habituellement montés avec le système électrochrome placé du côté tourné vers l'intérieur de l'habitation ou de l'habitacle du véhicule, il est préférable d'effectuer la mesure de la température sur la face tournée vers l'intérieur donc non directement exposée au rayonnement solaire.

Toutefois, il n'est en fait pas besoin de mesurer effectivement cette température. En effet, nous avons indiqué précédemment que le problème ici posé est celui de la variation de l'intensité du courant, notamment à l'instant t=O, lorsque la température varie.

Selon une variante plus particulièrement préférée de l'invention, cette propriété est utilisée pour mesurer la température, ou sélectionner directement la différence de potentiel ; pour cela, avant chaque commutation de coloration ou décoloration, le générateur de tension génère pendant une durée aussi brève que possible - de préférence inférieure à 500 ms et par exemple de 100 ms ou moins - une différence de potentiel $u_{1s}$, standard pour le système, choisie inférieure ou égale en valeur absolue à la différence de potentiel susceptible de conduire à une dégradation du système pour la température la plus élevée d'utilisation, l'intensité de courant $i_{1s}$ correspondante est simultanément mesurée par un ampèremètre et utilisée par l'unité de contrôle pour sélectionner la différence de potentiel $U_1$ à générer.

A noter qu'un tel mode de commande ne modifie pratiquement pas les temps de commutation, qui sont de l'ordre de la dizaine de secondes, et fournit avantageusement un moyen pour tenir compte très exactement de la résistance réelle de l'électrolyte, même si celle-ci a évolué du fait de la dégradation éventuelle de ce dernier.

D'autre part, une étude plus approfondie montre qu'un vitrage électrochrome pose également d'autres problèmes liés à son alimentation électrique, problèmes qu'une commande d'alimentation performante se doit aussi de satisfaire.

Pour mémoire, on peut tout d'abord rappeler que cette commande d'alimentation doit de préférence s'affranchir autant que possible du facteur taille dès que l'on opère avec des vitrages non carrés. Dans la demande de brevet européen EP-A-0 408 427 déposée le 17 juillet 1989, il a en effet été montré que le terme $\Sigma RI$ évoqué plus haut dépend à l'instant t=O de manière très étroite de la distance entre les bandes d'amenée du courant et que par la limitation de ce fait imposée à l'intensité du courant initial Io, on aboutit à une augmentation des temps de commutation du système. Par temps de commutation on entend le temps s'écoulant lors du passage d'un état de coloration donné à un autre état coloré ou décoloré, ou ce qui revient au même, le temps du passage de la quantité de charges correspondantes, quantité définie par le courant intégré I(t) qui pour sa part est une fonction strictement décroissante au cours du temps. Ce problème quine joue pas directement sur les performances intrinsèques du système mais sur les temps de commutation peut être avantageusement solutionné par un montage du type potentiostat à trois électrodes dont on trouvera des détails dans la demande européenne précitée.

Dans une de ses variantes de réalisation plus particulièrement préférée, l'invention a aussi pour objet un vitrage constitué de deux feuilles de verre revêtues de couches électronductrices transparentes, séparées par une couche d'un matériau électrochrome, un électrolyte et une contre-électrode, lesdites couches électroconductrices transparentes étant munies chacune d'une bande électroconductrice et disposées le long de bords opposés du vitrage, reliées à un générateur de tension qui génère en phase de coloration (ou respectivement en phase de décoloration), entre deux points A et B à proximité immédiate des bandes électroconductrices, une différence de potentiel $U_1 = (V_A-V_B)(t)$ telle qu'entre le point A et le point R de l'autre couche électroconductrice, faisant directement face au point A, on a une différence de potentiel $U_2=V_A-V_R$ constante au cours du temps et est choisie, dans le domaine de stabilité rédox des différentes couches du système et en fonction de ladite température T de l'électrolyte ou plus généralement de la température du vitrage.

Un autre aspect de l'alimentation des vitrages électrochromes est qu'il faut également tenir compte de ce que tous les degrés de coloration intermédiaires sont susceptibles d'être obtenus. Ces degrés de coloration peuvent être par exemple sélectionnés directement par l'intermédiaire d'une interface utilisateur affichant la transmission désirée et/ou de façon automatique en fonction par exemple de l'éclairement solaire, le vitrage étant alors plus ou moins coloré par exemple de manière à obtenir un éclairage constant de la pièce, éclairage mesuré par exemple au moyen de deux cellules photoélectriques placées de chaque côté du vitrage, et légèrement décalées l'une par rapport à l'autre pour ne pas perturber la mesure.

Une fois cette consigne de degré de coloration fournie à l'unité de contrôle, celle-ci peut opérer selon une première variante, en générant systématiquement une même fonction $U_1(t)$ pour tous les degrés de coloration (et de même une autre fonction $U_2(t)$ pour tous les degrés de décoloration), et en modulant le temps de commutation soit que celui-ci soit en mémoire et alors contrôlé par une unité de décompte du temps, soit que celui-ci soit contrôlé indirectement par la mesure ( au cours du temps ) par un ampèremètre, de l'intensité du courant, la phase de commutation étant stoppée lorsque l'intensité devient égale à un seuil mis en mémoire, ou mieux par la mesure au moyen d'un coulomètre, autrement dit d'un intégrateur de courant, de la quantité de charges insérées, chaque degré de coloration correspondant à une quantité donnée de charges. Il va de soi par ailleurs que la différence de potentiel $U_1$ est de toute façon pilotée en fonction de la température et de préférence telle que la différence de potentiel $U_2$ soit constante au cours d'une phase de commutation.

A noter que l'intégrateur est également très avantageux dans le cas où on vise une coloration ou décoloration totale car on sera certain dans ce cas, d'avoir une récupération totale des charges, et de ce fait d'éviter toute accumulation au cours des cycles qui serait néfaste pour le système.

Selon une seconde variante, on ne cherche pas à moduler le temps de commutation, mais on procède à une modulation des fonctions $U_1(t)$, une différence de potentiel moins grande (en valeur absolue) étant ainsi générée de manière à obtenir le degré de coloration voulu après un temps de commutation constant.

Cette deuxième façon de procéder, quine nécessite pas d'autres variantes qu'une nouvelle programmation de l'unité de contrôle, conduit à une coloration ou décoloration uniforme de toute la surface du vitrage. En revanche une modulation du temps de commutation conduit à une coloration plus préférentielle des bords, puis après un temps de relaxation de quelques secondes à une coloration homogène. Le choix entre l'une ou l'autre des modulations entraîne donc soit un changement de coloration marqué par une phase très contrastée, parfaitement observable ou au contraire quasi imperceptible pour un observateur peu attentif.

Un autre aspect fort important des commandes électriques des vitrages électrochromes est qu'il faut tenir compte du caractère isolant électronique imparfait des électrolytes et des phénomènes d'auto-décharges qui en résultent et qui tendent à ramener le système vers un état d'équilibre, état d'équilibre qui pour les systèmes oxyde de tungstène/oxyde d'iridium est très légèrement teinté mais relativement voisin de l'état de décoloration maximale.

N'étant observable qu'après par exemple plusieurs heures à température ambiante, ce phénomène est à nouveau caractéristique des applications "longue durée" telles que les fenêtres où on peut souhaiter par exemple qu'un vitrage soit en permanence à l'état coloré. Cette auto-décharge du système a probablement pour origine la présence de court-circuits - encore que ceux-ci soient peu nombreux avec un électrolyte en couche épaisse du type polymère - et probablement également un phénomène de réoxydation de l'oxyde de tungstène protoné dû à la présence pratiquement inévitable de molécules d'oxygène dissoutes dans le polymère.

Pour compenser cette auto-décharge, on prévoit généralement de "réinjecter" des protons à intervalles réguliers, dans la couche d'oxyde de tungstène. La difficulté est ici de déterminer une fréquence suffisamment élevée pour que l'effet de décoloration ne soit pas notable pour un observateur extérieur et néanmoins pas trop élevée pour éviter une surconsommation électrique ou une décharge de la batterie du véhicule. L'autre question ici posée est celle de la quantification de la décharge et donc de la quantité de charges qu'il est nécessaire de réinsérer dans le système.

Selon l'invention, il est proposé de contrôler la différence de potentiel $U_2$ à l'équilibre, c'est-à-dire la différence de potentiel entre deux points se faisant face A et R pour reprendre les références proposées précédemment. En effet, cette différence de potentiel $U_2$ est univoque par rapport à Q la quantité de charge effectivement insérée, au moment où s'effectue la mesure. Toute décharge se traduit par une diminution de la tension à l'équilibre $U_2$. S'agissant d'une tension à l'équilibre, il n'est pas souhaitable de contrôler le temps de "rechargement" du système par la mesure de $U_2$ aussi est-il préférable selon l'invention de se fier à la mesure de l'intensité électrique traversant le système. On peut également choisir d'opérer selon des durées fixes, de par exemple une dizaine de secondes, la recharge du système étant déclenchée pour une chute de potentiel par exemple analogue à celle obtenue après 30 minutes pour un système à température ambiante. Il est à noter que le contrôle du potentiel $U_2$ à l'équilibre rejoint celui de cette même différence de potentiel lors de la phase de commutation proprement dite, qui comme expliqué plus haut, permet de s'affranchir partiellement du facteur taille du système. Des mesures similaires peuvent être prises pour maintenir le système à l'état décoloré.

Il est à noter que l'intégrateur ne peut pas lui être utilisé car si le système est maintenu à un degré de coloration donné, la quantité de charges qui va être mesurée sera finalement très très grande, et bien supérieure à la limite avantageusement fixée pour une phase de commutation à 10 milliCoulombs par centimètre carré et qui lorsqu'elle est atteinte peut à titre de sécurité déclencher automatiquement la coupure de l'alimentation électrique. Cette valeur très grande n'a ici plus aucun sens dans la mesure où seules les "entrées" sont comptabilisées mais non les électrons "sortis" par l'électrolyte.

La compensation totale du phénomène d'auto-décharge permet par ailleurs de s'affranchir de tout problème de détermination de la quantité de charges à désinsérer en phase de décoloration dans la mesure où cette compensation conduit à travailler à charges constantes. Connaissant $U_2$ à l'équilibre, l'unité de contrôle connaît le nombre de charges à désinsérer et peut donc après avoir choisi la fonction $U_1$ adaptée à la température et au degré de décoloration souhaité, générer celle-ci et stopper le processus lorsque l'intégrateur indique que la quantité voulue de charges a été désinsérée.

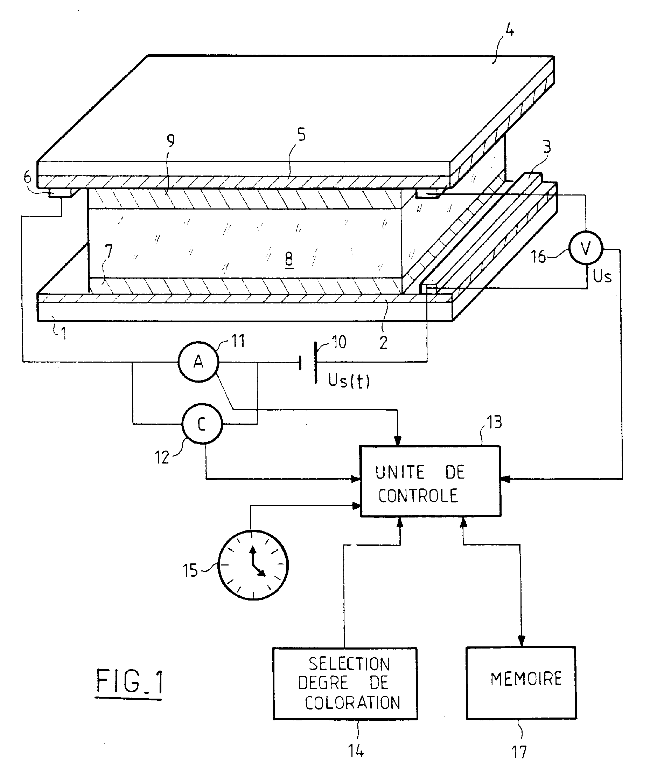

Un exemple de schéma de montage selon l'invention est représenté à la figure 1 annexée à ce mémoire. Le système électrochrome proposé est identique à celui proposé dans la demande de brevet EP-A-0 408 427.

Le système électrochrome est constitué par une feuille de verre 1 revêtue d'une couche électroconductrice transparente 2, munie d'une bande d'amenée de courant 3 (borne A). Cette bande 3 est de préférence parallèle à la longueur L du vitrage qui est par ailleurs d'une largeur l. La feuille de verre 1 fait face à une seconde feuille de verre 4 qui est de même revêtue d'une couche électroconductrice transparente 5 munie d'une bande d'amenée de courant 6 (borne B). Entre les deux électrodes transparentes 2, 5, on trouve successivement une couche 7 d'un matériau électrochrome anodique (de préférence de l'oxyde d'iridium), une couche électrolytique à conduction protonique 8 (de préférence un complexe polymérique entre du polyoxyde d'éthylène et de l'acide orthophosphorique rigoureusement anhydre) et une couche 9 d'un matériau électrochrome cathodique (de préférence du trioxyde de tungstène).

Lorsqu'une différence de potentiel $U_1$ est appliquée entre les bornes A et B par un générateur de tension 10, il se produit un transfert de charges électriques d'un matériau électrochrome à l'autre, transfert révélé par l'intensité du courant I mesurée instantanément par l'ampèremètre 11 et accompagné pour le respect des équilibres électriques d'un transfert des protons au travers de l'électrolyte. L'intégration du courant I par le coulomètre 12 fournit de plus la quantité de charges transférées lors de la commutation.

L'intensité du courant décroît au fur et à mesure que le nombre de sites disponibles pour les protons diminue. A l'instant 0, l'intensité $I_o$ dépend de la tension $U_1$ et de la température T de l'électrolyte. Pour un même système, lorsque la température augmente la résistance de l'électrolyte au passage des protons diminue, cette résistance peut en effet être calculée à partir de la formule $R = e/\sigma S$ où e est l'épaisseur de la couche électrolytique, S sa surface et σ la conductivité ionique. Si comme indiqué précédemment on utilise à titre d'électrolyte une solution solide d'acide phosphorique anhydre dans du polyoxyéthylène, en élevant la température de 20 à 80°C, on multiplie par 50 la conductivité protonique et on divise par autant la résistance. Selon la loi d'Ohm on va donc obtenir parallèlement une augmentation de l'intensité du courant I. Mais si on admet une intensité élevée, notamment à l'instant t = O où débute une commutation, on risque fort de quitter le domaine de stabilité rédox du système et de voir se produire notamment une réduction des protons en hydrogène moléculaire, avec l'apparition de bulles formées dans le polymère.

C'est pourquoi il est proposé selon l'invention d'imposer au système une tension $U_1$ fonction de plus du temps dont la valeur est fournie à une unité de contrôle 13 par la mémoire 17 en fonction de la température T du vitrage. Avantageusement, cette unité de contrôle prend égalaient en compte la coloration souhaitée par l'utilisateur (ici on a prévu par exemple un bouton sélection 14 mais on peut aussi prévoir un système automatisé limitant par exemple l'éclairage dans une pièce donnée). L'unité de contrôle a également des interfaces avec une unité de décompte du temps 15 pour le pilotage du temps de commutation et avec un ampèremètre, ce qui permet d'appliquer les méthodes indiquées précédemment. Par ailleurs, l'unité de contrôle reçoit également comme signal d'entrée la tension $U_2$ mesurée par un voltmètre 16, lors des phases de commutation et également lorsque le système est à l'équilibre à l'état coloré, le rôle de la tension $U_2$ ayant été détaillé précédemment.

## Revendications

1. Vitrage électrochrome comportant deux feuilles de verre (1, 4) revêtues de couches électroconductrices transparentes (2, 5), séparées par une couche d'un matériau électrochrome (7), un électrolyte (8) et une contre-électrode (9) et comprenant un circuit de commande électrique, un générateur de tension (10), une unité de contrôle (13) munie d'une mémoire (17) et des moyens permettant de déterminer la température T de l'électrolyte (8), **caractérisé en ce que** les couches électroconductrices sont reliées par ledit circuit de commande électrique audit générateur de tension (10) qui, conformément à la consigne reçue de ladite unité de contrôle (13) munie de ladite mémoire (17), génère, en fonction de la température T de l'électrolyte (8), une différence de potentiel $U_1$ qui est la même pour tout degré de coloration ou décoloration à obtenir, et module le temps de commutation de coloration ou décoloration en fonction dudit degré.

2. Vitrage électrochrome selon la revendication 1, **caractérisé en ce** qu'un thermomètre est placé au contact d'une des feuilles de verre.

3. Vitrage électrochrome selon la revendication 1, **caractérisé en ce que** le circuit de commande électrique comprend un ampèremètre (11) **et en ce qu'**avant chaque commutation de coloration ou décoloration, le générateur de tension (10) génère pendant un temps très court une x différence de potentiel $u_{1s}$, choisie inférieure ou égale en valeur absolue à la différence de potentiel susceptible de conduire à une dégradation du système pour la température la plus élevée d'utilisation, l'intensite de courant $i_{1s}$ correspondante est simultanément mesurée par ledit ampèremètre (11) et utilisée par l'unité de contrôle (13) pour sélectionner la différence de potentiel $U_1$ à générer.

4. Vitrage électrochrome selon la revendication 4, **caractérisé en ce que** la différence de potentiel $u_{1s}$ est appliquée pendant une durée inférieure à 500 ms et de préférence inférieure à 100 ms.

5. Vitrage électrochrome selon l'une des revendications 3 ou 4, **caractérisé en ce que** le temps de commutation est contrôlé indirectement par la mesure au cours du temps, par ledit ampèremètre (11), de l'intensité du courant, la phase de commutation étant stoppée lorsque l'intensité mesurée devient égale à un seuil mis en mémoire.

6. Vitrage électrochrome selon l'une des revendications précédentes, **caractérisé en ce que** la tension $U_1$ (t) générée obéit au cours de la phase de commutation à une fonction du temps telle qu'entre deux points A et R appartenant chacun à des couches électroconductrices différentes (2, 5) et se faisant directement face, on a une différence de potentiel constante $U_2$ (t) au cours de ladite phase de commutation et choisie par l'unité de contrôle (13) en fonction de la température T.

7. Vitrage électrochrome selon la revendication 6, **caractérisé en ce que** le circuit de commande électrique comporte un voltmère (16) mesurant la tension $U_2$.

8. Vitrage électrochrome selon la revendication 7, **caractérisé en ce que** l'unité de contrôle (13) déclenche la recharge du système lorsque le vitrage est maintenu à l'équilibre à l'état coloré ou respectivement à l'état décoloré, notamment en fonction de la mesure de la tension $U_2$ à l'équilibre à l'aide dudit voltmètre (16).

9. Vitrage électrochrome selon la revendication 8 en tant que dépendante de la revendication 3, **caractérisé en ce que** le temps de recharge du système est défini à l'aide de la mesure de l'intensité électrique traversant le système à l'aide dudit ampèremètre (11).

10. Vitrage électrochrome selon la revendication 8, **caractérisé en ce que** le temps de recharge du système est fixé.

11. Vitrage électrochrome selon l'une des revendications précédentes, **caractérisé en ce que** le circuit de commande électrique comporte une interface utilisateur (14) pour la sélection du degré de coloration ou décoloration souhaité.

12. Vitrage électrochrome selon l'une des revendications 1 à 10, **caractérisé en ce que** la sélection du degré de coloration ou décoloration est faite de façon automatique, notamment en fonction de l'éclairement solaire mesuré à l'aide de cellules photoélectriques.

13. Vitrage électrochrome selon l'une des revendications précédentes, **caractérisé en ce que** le temps de commutation est dans la mémoire (17) et contrôlé par une unité de décompte du temps (15).

14. Vitrage électrochrome selon l'une des revendications précédentes, **caractérisé en ce que** le temps de commutation est contrôlé par la mesure de la quantité de charges insérées au moyen d'un coulomètre, chaque degré de coloration correspondant à une quantité donnée de charges, la phase de commutation étant stoppée lorsque la quantité de charges insérées mesurée correspond au degré de coloration ou décoloration de la consigne.

15. Utilisation du vitrage électrochrome selon la revendication 2 pour le contrôle de la température dans les bâtiments ou les habitacles de véhicules automobiles, **caractérisée en ce que** ladite température est mesurée en plaçant ledit thermomètre sur la feuille de verre non directement exposée au rayonnement solaire.

**Patentansprüche**

1. Elektrochrome Verglasung, welche zwei mit durchsichtigen elektrisch leitfähigen Schichten (2, 5) überzogene Glasscheiben (1, 4) enthält, die durch eine Schicht aus einem elektrochromen Material (7), einem Elektrolyten (8) und einer Gegenelekrode (9) getrennt sind, und einen elektrischen Steuerstromkreis, einen Spannungsgenerator (10), eine mit einem Speicher (17) ausgerüstete Steuereinheit (13) und Mittel umfaßt, welche die Messung der Temperatur T des Elektrolyten (8) ermöglichen, **dadurch gekennzeichnet, daß** die elektrisch leitfähigen Schichten über den elektrischen Steuerstromkreis mit dem Spannungsgenerator (10) verbunden sind, der nach dem Befehl, den er von der mit dem Speicher (17) ausgerüsteten Steuereinheit (13) erhält, welche auch die Zeit für den Färbungs- oder Entfärbungswechselzyklus abhängig vom Grad verändert, in Abhängigkeit von der Temperatur T des Elektrolyten (8) eine Potentialdifferenz $U_1$ erzeugt, die für den gesamten hervorzubringenden Färbungs- oder Entfärbungsgrad dieselbe ist.

2. Elektrochrome Verglasung nach Anspruch 1, **dadurch gekennzeichnet, daß** ein Thermometer im Kontakt mit einer der Glasscheiben angebracht ist.

3. Elektrochrome Verglasung nach Anspruch 1, **dadurch gekennzeichnet, daß** der elektrische Steuerstromkreis ein Amperemeter (11) enthält **und daß** vor jedem Färbungs- oder Entfärbungswechselzyklus der Spannungsgenerator (10) während einer sehr kurzen Zeitspanne eine Potentialdifferenz $U1_s$ erzeugt, die kleiner oder gleich dem Absolutwert der Potentialdifferenz gewählt ist, die bei der höchsten Betriebstemperatur zu einer Verschlechterung des Systems führen kann, wobei gleichzeitig die entsprechende Stärke des Stromes $i1_s$ durch das Amperemeter (11) gemessen und von der Steuereinheit (13) für die Auswahl der zu erzeugenden Potentialdifferenz $U_1$ genutzt wird.

4. Elektrochrome Verglasung nach Anspruch 4, **dadurch gekennzeichnet, daß** die Potentialdifferenz $U_{1s}$ während einer Zeitspanne von weniger als 500 ms und vorzugsweise weniger als 100 ms angelegt wird.

5. Elektrochrome Verglasung nach Anspruch 3 oder 4, **dadurch gekennzeichnet, daß** die Wechselzykluszeit durch die Messung der Stromstärke in der Zeit mittels des Amperemeters (11) indirekt gesteuert ist, wobei die Wechselphase beendet wird, wenn die gemessene Stromstärke einen in den Speicher eingegebenen Grenzwert erreicht.

6. Elektrochrome Verglasung nach einem der vorhergehenden Ansprüche, **dadurch gekennzeichnet, daß** die erzeugte Spannung $U_1$ (t) während der Wechselphase derart einer Zeitfunktion gehorcht, daß zwischen zwei Punkten A und R, die jeweils zu einer anderen elektrisch leitfähigen Schicht (2, 5) gehören und sich direkt gegenüberstehen, während dieser Wechselphase eine konstante Potentialdifferenz $U_2$ (t) herrscht, die von der Steuereinheit (13) in Abhängigkeit von der Temperatur T gewählt ist.

7.  Elektrochrome Verglasung nach Anspruch 6, **dadurch gekennzeichnet, daß** der elektrische Steuerstromkreis ein die Spannung $U_2$ messendes Voltmeter (16) enthält.

8.  Elektrochrome Verglasung nach Anspruch 7, **dadurch gekennzeichnet, daß** die Steuereinheit (13) die Aufladung des Systems, insbesondere in Abhängigkeit von der Messung der Spannung $U_2$ im Gleichgewicht mittels des Voltmeters (16), auslöst, wenn die Verglasung im gefärbten bzw. entfärbten Zustand im Gleichgewicht gehalten wird.

9.  Elektrochrome Verglasung nach Anspruch 8 als abhängigen Anspruch des Anspruchs 3, **dadurch gekennzeichnet, daß** die Aufladezeit des Systems durch die Messung der Stärke des elektrischen Stroms, der das System durchfließt, mittels des Amperemeters bestimmt wird.

10. Elektrochrome Verglasung nach Anspruch 8, **dadurch gekennzeichnet, daß** die Aufladezeit des Systems feststeht.

11. Elektrochrome Verglasung nach einem der vorhergehenden Ansprüche, **dadurch gekennzeichnet, daß** der elektrische Steuerstromkreis eine Betriebsschnittstelle (14) für die Auswahl des gewünschten Färbungs- oder Entfärbungsgrades enthält.

12. Elektrochrome Verglasung nach einem der Ansprüche 1 bis 10, **dadurch gekennzeichnet, daß** der Färbungs- oder Entfärbungsgrad automatisch, insbesondere in Abhängigkeit von der mittels Photozellen gemessenen Sonneneinstrahlung, ausgewählt wird.

13. Elektrochrome Verglasung nach einem der vorhergehenden Ansprüche, **dadurch gekennzeichnet, daß** sich die Wechselzykluszeit im Speicher (17) befindet und von einer Zeitmeßeinrichtung (15) kontrolliert wird.

14. Elektrochrome Verglasung nach einem der vorhergehenden Ansprüche, **dadurch gekennzeichnet, daß** die Wechselzykluszeit durch die Messung der Menge der eingelagerten Ladungen mittels eines Coulometers gesteuert wird, wobei jeder Färbungsgrad einer gegebenen Ladungsmenge entspricht und die Wechselphase beendet wird, wenn die gemessene Menge der eingelagerten Ladungen dem Färbungs- oder Entfärbungsgrad des Befehls entspricht.

15. Verwendung der elektrochromen Verglasung nach Anspruch 2 zur Temperaturregelung in Gebäuden oder Autofahrgastzellen, **dadurch gekennzeichnet, daß** die Temperatur gemessen wird, indem man das Thermometer auf der nicht direkt der Sonneneinstrahlung ausgesetzten Glasscheibe anbringt.

## Claims

1.  Electrochromic pane comprising two glass sheets (1, 4) faced with transparent electrically conducting films (2, 5), separated by a film of an electrochromic material (7), an electrolyte (8) and a counter-electrode (9), and comprising an electrical control circuit, a voltage generator (10), a control unit (13) equipped with a memory (17) and means enabling the temperature T of the electrolyte (8) to be determined, characterized in that the electrically conducting films are connected by said electrical control circuit to said voltage generator (10) which, in accordance with the set-point value received from said control unit (13) equipped with said memory (17) generates, as a function of the temperature T of the electrolyte (8), a potential difference $U_1$ which is the same for any degree of colouration or decolouration to be obtained, and modulates the switching time for colouration or decolouration as a function of said degree.

2.  Electrochromic pane according to Claim 1, characterized in that a thermometer is placed in contact with one of the glass sheets.

3.  Electrochromic pane according to Claim 1, characterized in that the electrical control circuit comprises an ammeter (11) and in that, before each colouration or decolouration switching, the voltage generator (10) generates for a very short period a potential difference $u_{1s}$, chosen less than or equal to in absolute value the potential difference capable of leading to a degradation of the system for the highest temperature of use, the corresponding current intensity $i_{1s}$ is simultaneously measured by said ammeter (11) and is used by the control unit (13) for selecting the potential difference $U_1$ to be generated.

4.  Electrochromic pane according to Claim 3, characterized in that the potential difference $u_{1s}$ is applied for a period of less than 500 ms and preferably less than 100 ms.

5. Electrochromic pane according to one of Claims 3 or 4, characterized in that the switching temperature is controlled indirectly by the measurement, during the course of time, by said ammeter (11) of the intensity of the current, the switching phase being stopped when the measured intensity becomes equal to a threshold stored in the memory.

6. Electrochromic pane according to one of the preceding Claims, characterized in that the voltage generated $U_1$ (t) obeys, during the switching phase, a function of time such that, between two points A and R belonging each to different electrically conducting films (2, 5) and directly opposite each other, there is a constant potential difference $U_2$ (t) during said switching phase, chosen by the control unit (13) as a function of the temperature T.

7. Electrochromic pane according to Claim 6, characterized in that the electrical control circuit comprises a voltmeter (16) measuring the voltage $U_2$.

8. Electrochromic pane according to Claim 7, characterized in that the control unit (13) initiates the recharging of the system when the pane is maintained in equilibrium in the coloured or decoloured state respectively, notably as a function of the measurement of the voltage $U_2$ at equilibrium by means of said voltmeter (16).

9. Electrochromic pane according to Claim 8, in so far as dependent upon Claim 3, characterized in that the recharging time of the system is defined by means of the measurement of the electrical intensity passing through the system by means of said ammeter (11).

10. Electrochromic pane according to Claim 8, characterized in that the recharging time of the system is fixed.

11. Electrochromic pane according to one of the preceding Claims, characterized in that the electrical control circuit comprises a user interface (14) for the selection of the desired degree of colouration or decolouration.

12. Electrochromic pane according to one of Claims 1 to 10, characterized. in that the selection of the degree of colouration or decolouration is made in automatic manner, notably as a function of the solar illumination measured by means of photoelectric cells.

13. Electrochromic pane according to one of the preceding Claims, characterized in that the switching time is in the memory (17) and is controlled by a time counting-down unit (15).

14. Electrochromic pane according to one of the preceding Claims, characterized in that the switching time is controlled by the measurement of the quantity of charges inserted by means of a coulometer, each degree of colouration corresponding to a given quantity of charges, the switching phase being stopped when the quantity of inserted charges measured corresponds to the degree of colouration or decolouration of the set-point value.

15. Use of the electrochromic pane according to Claim 2 for controlling the temperature in buildings or the passenger compartments of automobile vehicles, characterized in that said temperature is measured by placing said thermometer on the glass sheet not directly exposed to the solar radiation.

FIG_1

Us(t)

UNITE DE CONTROLE

SELECTION DEGRE DE COLORATION

MEMOIRE